# EUROPEAN PATENT APPLICATION

(11) **EP 3 709 132 A1**
(43) Date of publication of application: **16.09.2020**
(21) Application number: 20156562.9
(22) Date of filing: 11.02.2020
(51) Int. Cl.: G06F 3/01, G06F 3/023, G06F 3/0488

(54) **CHARACTER INPUT DEVICE, CHARACTER INPUT METHOD, AND CHARACTER INPUT PROGRAM**

(30) Priority: 13.03.2019 JP 2019045469
(71) Applicant: Omron Corporation, Kyoto-shi, Kyoto 600-8530 (JP)
(72) Inventor: NOMURA, Riki, Kizugawa-shi, Kyoto 619-0283 (JP)
(74) Representative: Kilian Kilian & Partner

(57) **Abstract**

A character input device includes a display that displays a scene image in a virtual space with a virtual character input function, a starting character determination unit that identifies a starting position for the character input in the virtual character input function, an operation direction determination unit that detects a direction from the starting point, an operation detector that determines the character input in accordance with the direction, and a controller that outputs information indicating an operation of the character input to the display.

## Description

### CROSS-REFERENCE TO RELATED APPLICATION

This application claims priority to Japanese Patent Application No. 2019-045469 filed on March 13, 2019, the contents of which are incorporated herein by reference.

### FIELD

The present invention relates to a technique for inputting characters in a virtual space.

### BACKGROUND

An input device described in Patent Literature 1 allows a touchpad operation in a virtual space. A user operates the input device with his or her digit to input characters in a virtual space or to operate, for example, an application.

### CITATION LIST

### PATENT LITERATURE

Patent Literature 1: Japanese Unexamined Patent Application Publication No. 2014-154074

### SUMMARY

### TECHNICAL PROBLEM

However, the user operates the input device with the structure described in Patent Literature 1 while holding the device in his or her hand, and thus has a limitation in other operations. The user may thus have a lower sense of immersion in the virtual space.

One or more aspects of the present invention are directed to a technique for enabling an efficient input operation without lowering the user's sense of immersion.

### SOLUTION TO PROBLEM

A character input device includes a display that displays a scene image in a virtual space with a virtual character input function, a starting character determination unit that identifies a starting position for the character input in the virtual character input function, an operation direction determination unit that detects a direction from the starting point, an operation detector that determines the character input in accordance with the direction, and a controller that outputs information indicating an operation of the character input to the display.

This structure enables the user to efficiently input characters without having a lower sense of immersion in the virtual space.

The operation direction determination unit in the character input device may be a touchpad.

This structure facilitates determination of the direction of a character input.

The operation direction determination unit in the character input device may be a cross-shaped key.

This structure allows reliable determination of the direction of a character input.

The display in the character input device may display the virtual space in a manner superimposed on a real space.

This structure is usable for augmented reality.

The display in the character input device may display a real space in a manner superimposed on the virtual space.

This structure is usable for mixed reality.

The display in the character input device may display the virtual space having a time axis in a manner superimposed on a real space.

This structure is usable for substitutional reality.

### ADVANTAGEOUS EFFECTS

The above aspects of the present invention enable an efficient input operation without lowering a user's sense of immersion.

### BRIEF DESCRIPTION OF THE DRAWINGS

Fig. 1 is a block diagram of a character input device according to a first embodiment of the present invention.
Figs. 2A and 2B are schematic diagrams of the character input device according to the first embodiment of the present invention.
Fig. 3 is a flowchart showing an operation of the character input device according to the first embodiment of the present invention.
Fig. 4 is a schematic diagram of a character input device according to a second embodiment of the present invention.
Fig. 5 is a block diagram of a character input device according to a third embodiment of the present invention.
Fig. 6 is a schematic diagram of the character input device according to the third embodiment of the present invention.

### DETAILED DESCRIPTION

Embodiments of the present invention will now be described with reference to the drawings.

### Example Use

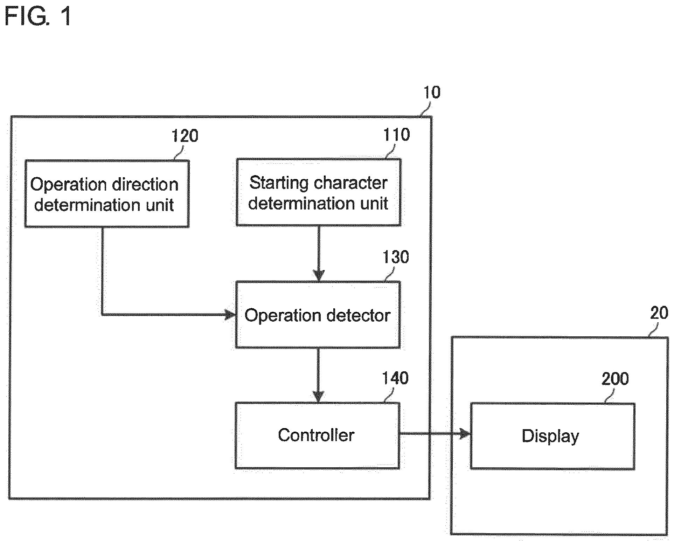

An example use of the present invention will be described first with reference to Fig. 1. Fig. 1 is a block diagram of a character input device 10 according to a first embodiment of the present invention. The character input device 10 is, for example, a stick hand controller. The character input device 10 detects movement of a user's hand.

The character input device 10 includes a starting character determination unit 110, an operation direction determination unit 120, an operation detector 130, and a controller 140.

A user experiences the virtual space by wearing a virtual reality (VR) headset. The VR headset for experiencing the virtual space is in the form of goggles. The VR headset includes a gyroscope, an accelerometer, and a magnetometer. The VR headset is mounted on the head of the user, and detects forward and backward, right and left, and up and down movements of the head to project such movements on the x-, y-, and z-axes in the virtual space.

A virtual space 20 includes a display 200. In other words, the display 200 is placed as a scene image appearing in the virtual space 20, which is visible to the user wearing the VR headset.

The display 200 includes a virtual software keyboard that allows character input in the virtual space 20. A string of characters is arranged on the software keyboard, for example, in the same format as a numeric keypad. When a character is input with the character input device 10 in the virtual space 20, a display image based on the input character is output to the display 200. The software keyboard is not limited to the same format as a numeric keypad described above, and may have any structure that allows input of a character string.

In this embodiment, the user identifies the display 200 in the virtual space 20 and inputs the Japanese hiragana character No. The user identifies, with the starting character determination unit 110 included in the character input device 10, the hiragana N-column of the Japanese syllabary table. The operation detector 130 detects an input for the hiragana N-column.

The operation detector 130 outputs information indicating the input for the hiragana N-column to the controller 140. The controller 140 outputs information indicating the input for the hiragana N-column to the display 200.

The display 200 may display a flick input guide for the hiragana N-column. When a key corresponding to a character to be input is selected, the flick input guide displays, as a guide, characters included in the same hiragana column as the character to be input.

More specifically, for example, the user selects the character Na. In response to this, the characters Na, Ni, Nu, Ne, and No appear in another area as a guide. In other words, the flick input guide allows the user to clearly recognize a character to be input.

The user selects the character No with the operation direction determination unit 120 included in the character input device 10.

The operation detector 130 detects the character No selected by the user. The operation detector 130 outputs, to the controller 140, information indicating that the character No is selected. The controller 140 outputs the character No to the display 200.

In this manner, the user can input characters in the virtual space 20. Additionally, the user can input characters with an easy operation. The user can use a familiar method for inputting characters, and thus does not have a lower sense of immersion.

### Example Structure 1

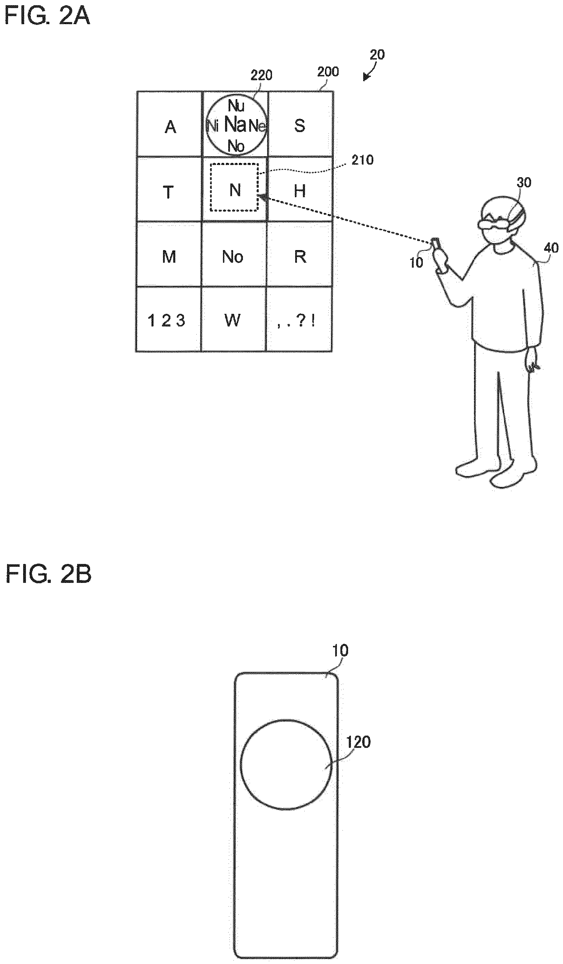

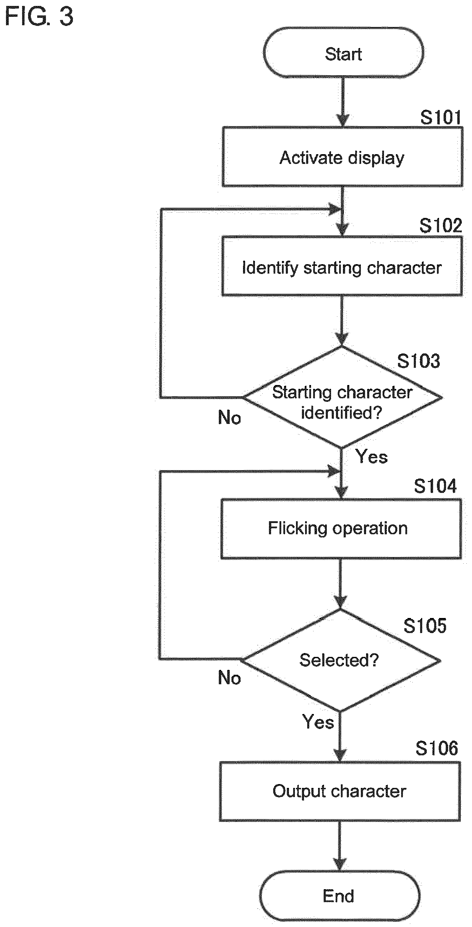

Fig. 1 is a block diagram of a character input device 10 according to a first embodiment of the present invention. Figs. 2A and 2B are schematic diagrams of the character input device 10 according to the first embodiment of the present invention. Fig. 3 is a flowchart showing an operation of the character input device 10 according to the first embodiment of the present invention.

An example structure will be described in more detail with reference to Figs. 2A and 2B based on the structure of the character input device 10 shown in Fig. 1.

As shown in Figs. 1 and 2A, a user 40 wears a virtual reality (VR) headset 30. The user 40 can view the virtual space 20 through the VR headset 30. The virtual space 20 includes the display 200.

The user 40 holds the character input device 10. As shown in Fig. 2B, the character input device 10 includes the operation direction determination unit 120. The operation direction determination unit 120 is, for example, a touchpad. More specifically, the touchpad includes a flat sensor. The touchpad is operable with a digit sliding on the sensor.

The user 40 identifies the display 200 in the virtual space 20, and inputs the character No. The user 40 identifies the hiragana N-column. More specifically, the user 40 identifies the hiragana N-column on the display 200 in the virtual space 20 by, for example, pointing at the column with a laser pointer. For example, the position of the hiragana N-column may be identified with a gaze cursor included in the VR headset 30. In response to this, the operation detector 130 detects an input for the hiragana N-column.

The operation detector 130 outputs information indicating the input for the hiragana N-column to the controller 140. The controller 140 outputs information indicating the input for the hiragana N-column to the display 200.

The user 40 operates the touchpad as the operation direction determination unit 120 with the same method as the flick input while pointing at the character Na on the display 200. In this state, a flick input guide 220 displays characters included in the hiragana N-column. The user 40 performs a sliding operation downward from the character Na to select the character No. The character Na corresponds to a starting position in an aspect of the present invention.

To input the character Na, an operation described below may be performed. The user 40 taps the operation direction determination unit 120 while pointing at the character Na. In response to this, the character Na is input.

The operation detector 130 detects the character No selected by the user 40. The operation detector 130 outputs, to the controller 140, information indicating that the character No is selected. The controller 140 outputs the character No to the display 200.

A process performed by the character input device 10 will now be described with reference to the flowchart in Fig. 3.

The character input device 10 receives an operation performed by the user 40, and activates the display 200 in the virtual space 20 (S101).

The character input device 10 receives an operation performed by the user 40, and identifies a starting character on the display 200 (S102).

The operation detector 130 determines whether a starting character is identified (S103). When the operation detector 130 determines that a starting character is identified (Yes in S103), the character input device 10 receives an operation performed by the user 40 and selects an input character (S104). The input character may be displayed by the flick input guide 220.

The operation detector 130 determines whether the input character is selected (S105). When the operation detector 130 determines that the input character is selected (Yes in S105), the controller 140 outputs the input character to the display 200 (S106).

When determining that no starting character is identified in step S103 (No in S103), the processing in step S102 is repeated.

When determining that no input character is selected in step S105 (No in S105), the processing in step S104 is repeated.

In this manner, the user 40 can input characters in the virtual space 20. Additionally, the user 40 can input characters with an easy operation. The user 40 can use a familiar flick input method for inputting characters, and thus does not have a lower sense of immersion.

Although the structure described above uses a touchpad as the operation direction determination unit 120, the character input device 10 may have any structure that allows an input character to be selected by a sliding operation such as a flicking operation.

The character input device 10 may have any shape that does not eliminate the sense of immersion for the user. The operation direction determination unit 120 may also have any shape.

The structure described above uses the flick input guide 220 to input characters on the display 200, and improves usability for the user 40 in inputting characters. However, the above structure may eliminate the flick input guide 220 when the flick input guide 220 lowers the sense of immersion for the user 40.

### Example Structure 2

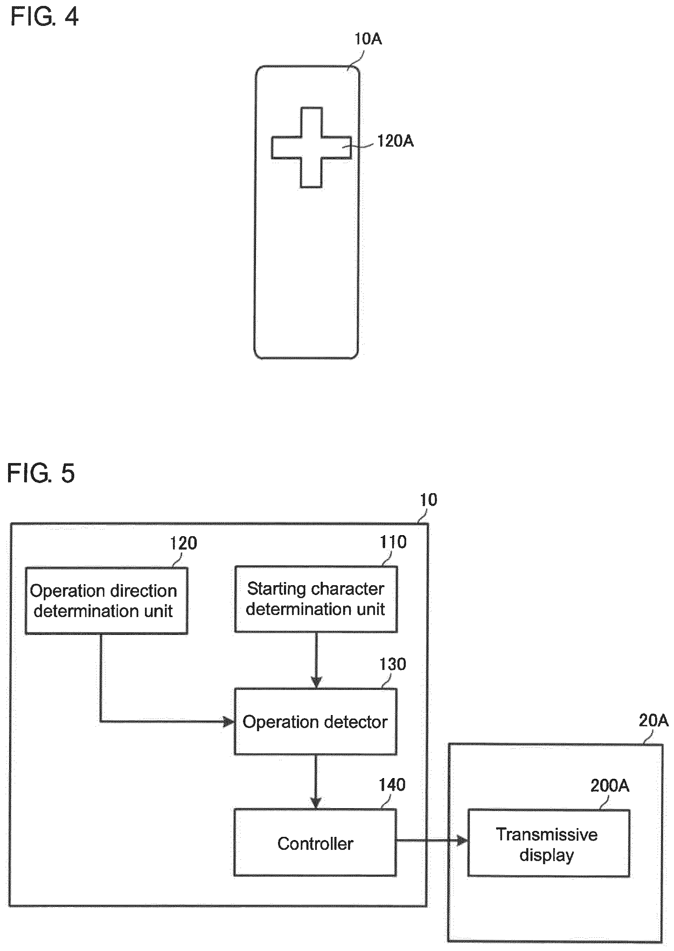

An operation for inputting a character will now be described in detail with reference to Fig. 4. Fig. 4 is a schematic diagram of a character input device 10A according to a second embodiment of the present invention.

The second embodiment differs from the first embodiment in the shape of an operation detector. The other components and processes are the same as those in the first embodiment, and will not be described.

The character input device 10A includes an operation direction determination unit 120A. The operation direction determination unit 120A is, for example, a cross-shaped key.

This structure allows the user 40 to more easily determine the direction being identified. In other words, this structure reduces input errors in selecting characters to be input.

This structure also allows the user 40 to input characters in the virtual space 20. Additionally, the user 40 can input characters with an easy operation. The user 40 can use a familiar method for inputting characters with a cross-shaped key, and thus does not have a lower sense of immersion.

### Example Structure 3

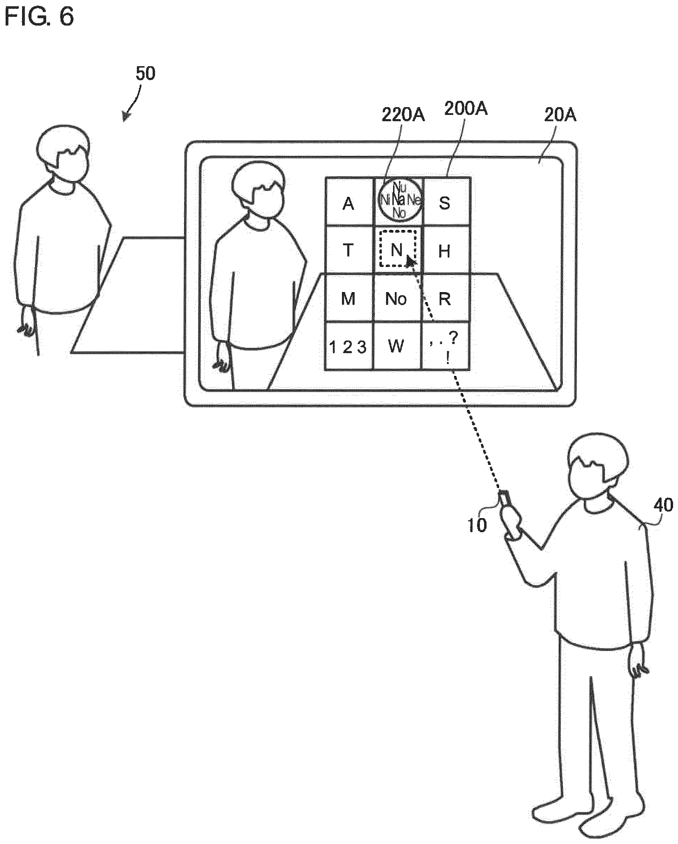

An operation for inputting a character will now be described in detail with reference to Fig. 5. Fig. 5 is a block diagram of a character input device 10 according to a third embodiment of the present invention. Fig. 6 is a schematic diagram of the character input device 10 according to the third embodiment of the present invention.

The third embodiment differs from the first embodiment in including a transmissive display 200A. The other components and processes are the same as those in the first embodiment, and will not be described.

A virtual space 20A includes the transmissive display 200A. More specifically, the transmissive display 200A displays the virtual space 20A in a manner superimposed on a real space. In other words, the virtual space 20A is used in augmented reality (AR).

The transmissive display 200A is included in a thin plate-like device having a camera function. The transmissive display 200A is, for example, a liquid crystal display of, for example, a smartphone.

The user 40 captures an image of a real space 50 using the camera function. The captured image of the real space 50 appears on the transmissive display 200A.

The user 40 inputs the Japanese hiragana character No on the transmissive display 200A. The user 40 identifies the hiragana N-column on the transmissive display 200A. The operation detector 130 detects an input for the hiragana N-column.

The operation detector 130 outputs information indicating the input for the hiragana N-column to the controller 140. The controller 140 outputs information indicating the input for the hiragana N-column to the transmissive display 200A.

The transmissive display 200A uses the flick input guide 220 to display characters included in the hiragana N-column.

The user 40 operates the touchpad as the operation direction determination unit 120 with the same method as the flick input to perform a sliding operation from the character Na to select the character No. In this case, the user 40 performs a sliding operation downward as viewed from the front of the character input device 10. In response to this, the character No is selected.

The operation detector 130 detects the character No selected by the user 40. The operation detector 130 outputs, to the controller 140, information indicating that the character No is selected. The controller 140 outputs the character No to the transmissive display 200A.

This structure allows the user 40 to input characters in AR. Additionally, the user 40 can input characters with an easy operation. The user 40 can use a familiar method for inputting characters, and thus does not have a lower sense of immersion.

AR may use either a vision-based technique or a markerless technique.

The structure in the above example is used in AR. However, the transmissive display 200A can also be used in mixed reality (MR), in which the transmissive display 200A displays the virtual space and the real space in a mixed manner, or specifically, the transmissive display 200A displays the real space in a manner superimposed on the virtual space.

Also, the transmissive display 200A can be used in a space in which the virtual space having a time axis is displayed in a manner superimposed on the real space.

The correspondence between the structures of the claimed invention and the structures in the above embodiments may be expressed as specified in the appendix below.

### Appendix

A character input device (10), comprising:
a display (200) configured to display a scene image in a virtual space allowing a character input;
a starting character determination unit (110) configured to identify a starting position for the character input;
an operation direction determination unit (120) configured to detect a direction from the starting point;
an operation detector (130) configured to determine the character input in accordance with the direction; and
a controller (140) configured to output information indicating an operation of the character input to the display (200).

### REFERENCE SIGNS LIST

- 10, 10A: character input device
- 20, 20A: virtual space
- 30: VR headset
- 40: user
- 50: real space
- 110: starting character determination unit
- 120, 120A: operation direction determination unit
- 130: operation detector
- 140: controller
- 200: display
- 200A: transmissive display
- 210: character string display area
- 220: flick input guide

## Claims

1. A character input device (10; 10A), comprising:
a display (200) configured to display a scene image in a virtual space allowing a character input;
a starting character determination unit (110) configured to identify a starting position for the character input;
an operation direction determination unit (120; 120A) configured to detect a direction from the starting point;
an operation detector (130) configured to determine the character input in accordance with the direction; and
a controller (140) configured to output information indicating an operation of the character input to the display (200).

2. The character input device (10; 10A) according to claim 1, wherein
the operation direction determination unit (120; 120A) is a touchpad.

3. The character input device (10; 10A) according to claim 1, wherein
the operation direction determination unit (120; 120A) is a cross-shaped key.

4. The character input device (10; 10A) according to claim 1, wherein
the display (200) displays the virtual space in a manner superimposed on a real space.

5. The character input device (10; 10A) according to claim 1, wherein
the display (200) displays a real space in a manner superimposed on the virtual space.

6. The character input device (10; 10A) according to claim 1, wherein
the display (200) displays the virtual space having a time axis in a manner superimposed on a real space.

7. A character input method implementable by a computer, the method comprising:
displaying a scene image in a virtual space allowing a character input;
identifying a starting position for the character input;
detecting a direction from the starting point;
determining the character input in accordance with the direction; and
outputting information indicating an operation of the character input.

8. A character input program causing a computer to implement:
displaying a scene image in a virtual space allowing a character input;
identifying a starting position for the character input;
detecting a direction from the starting point;
determining the character input in accordance with the direction; and
outputting information indicating an operation of the character input.
